# EUROPEAN PATENT APPLICATION

(11) **EP 0 925 963 A1**
(43) Date of publication of application: **30.06.1999**
(21) Application number: 98204450.5
(22) Date of filing: 24.12.1998
(51) Int. Cl.: B60D 1/30, B60D 1/44, B60D 1/40, B62D 13/02

(54) **Towing device for coupling a towed vehicle to a towing vehicle comprising a trailer steering device**

(30) Priority: 24.12.1997 NL 1007906
(71) Applicant: Buiscar B.V., 7301 BR Apeldoorn (NL)
(72) Inventor: Boezeman, Arjan Hendrik, 2596 HL Den Haag (NL)
(74) Representative: de Bruijn, Leendert C.

(57) **Abstract**

Assembly comprising a pulling vehicle (1), a trailer (2) and a device (15) for pulling and steering the trailer (2) with the aid of the said pulling vehicle (1), it being possible to steer the trailer (2) with the aid of the front wheels (6), and the said device (15) for pulling and steering the trailer (2) comprising: a shaft (3), the first end (31) of which is attached pivotably to the pulling vehicle (1) and the second end (32) of which is attached pivotably to the trailer (2); and a steering rod (4), the first end (41) of which is attached pivotably to the pulling vehicle (1), the pivot point of the steering rod (4) on the pulling vehicle (1) being displaceable from a first position, with respect to the longitudinal axis (13) of the said vehicle (1), to a second position, and the second end (42) of the steering rod (4) being connected to the front wheels (6) of the trailer, in such a manner that the front wheels (6) can be steered with the aid of the steering rod (4).

## Description

The present invention relates to an assembly comprising a pulling vehicle, a trailer and a device for pulling and steering the trailer with the aid of the said pulling vehicle, it being possible to steer the trailer with the aid of the front wheels, and the said device for pulling and steering the trailer comprising:
a shaft, the first end of which is attached pivotably to the pulling vehicle and the second end of which is attached pivotably to the trailer;
and a steering rod, the first end of which is attached pivotably to the pulling vehicle, the pivot point of the steering rod on the pulling vehicle being displaceable from a first position, with respect to the longitudinal axis of the said vehicle, to a second position, and the second end of the steering rod being connected to the front wheels of the trailer, in such a manner that the front wheels can be steered with the aid of the steering rod.

An assembly of the type mentioned in the preamble is known from international patent application WO95/04668.

This device for pulling and steering the trailer with the aid of the said pulling vehicle is designed, in the case of the known assembly, in such a way that the shaft is to be connected to the trailer not in a pivotable manner, but rather in a fixed position. However, in the latter case, substantial forces will be exerted on the device when driving through bends. As a result, the device according to the known assembly will rapidly become worn and will be susceptible to failure.

Moreover, the known device is fitted with two steering rods which are at an angle to the vertical. When travelling through a bend, it will be necessary to compensate for the variation in length between the two steering rods, with the result that a relatively complicated and expensive means of attaching the steering rods to the trailer is required.

A further drawback of the known device is that the steering rods are directly coupled to the front axle of the trailer. This means that the steering signal is transmitted to the front axle of the trailer by the steering rods with a transmission ratio equal to one.

Finally, it should be noted that if the pivoting movement of the shaft with respect to the trailer is not limited in the assembly in accordance with W095/04668, the pulling vehicle is connected to the trailer with the aid of a device which comprises as many as twelve rods and nine pivot points. Clearly, such a complex system must be adjusted with the greatest possible degree of accuracy in order to be able to achieve any kind of functional system. Moreover, in such a complex device it will be difficult to keep the steering function of the device completely separate from the pulling function of the device.

The present invention is based on the insight that for an assembly and a device of the type mentioned in the preamble to operate successively, it must be possible for the steering and pulling function of the device to be completely separate.

The object of the present invention is to provide an assembly and a device of a type mentioned in the preamble which function better and have a simpler structure than the devices which are known in the prior art.

In the present invention, this object is achieved by the fact that the said first position of the pivot point of the first end of the steering rod on the pulling vehicle essentially coincides with the pivot point of the shaft on the pulling vehicle, and that the second end of the steering rod is pivotably connected to the free end of a steering arm which is attached pivotably to the trailer, the pivot point of the steering arm on the trailer coinciding with the pivot point of the shaft on the trailer.

The effect of making the pivot points on the pulling vehicle coincide in a limit position is that in this position one rod is eliminated in the mechanism of the device.

The effect of making the pivot points on the trailer coincide is that this also removes one rod in the mechanism. Moreover, if the device uses only one steering rod, the steering behaviour of the assembly on left-hand bends is identical to that on righthand bends.

The assembly is improved further by the fact that the steering arm is connected to the front wheels of the trailer with the aid of a flexible component which is guided by a pair of pulleys, the first pulley being connected to the steering arm and the second pulley being connected to the front wheels.

The pulleys and the flexible component provide a transmission ratio of the steering signal which is transmitted to the trailer by the pulling vehicle. Moreover, the use of a pair of pulleys and a flexible component for this purpose means that the transmission ratio is constant, irrespective of the instantaneous angular displacement of the steering arm. A further advantage is that the transmission ratio can be changed by replacing only one of the pulleys.

Furthermore, it is advantageous that the front wheels of the trailer are connected to a front axle and the front axle as a whole can rotate with respect to the trailer.

This measure ensures that the structure of the steering front axle is robust and can be of relatively simple design. Moreover, the angular displacement of the pulling vehicle is easy to transmit to the pivotable axle.

It is desirable that the pivot point of the first end of the steering rod is displaceably attached to a path which is described by the end of the steering rod, in the event of a rotation of the steering rod about the pivot point at which the second end of the steering rod is connected to the steering arm, when the pulling vehicle and the trailer are positioned in such a manner with respect to one another that the shaft is in line with the longitudinal axis of the pulling vehicle.

This measure means, firstly, that the pivot point of the steering rod can be displaced using relatively little force. The means for displacing the pivot point may consequently be of relatively lightweight design.

A second result is that displacement of the pivot point of the steering rod on the pulling vehicle does not transmit a steering signal to the front wheels of the trailer. This means, inter alia, that the pivot point could be adjusted while the vehicles of the assembly are in motion.

It is advantageous that there are means on the pulling vehicle for displacing the pivot point of the first end of the steering rod with respect to the longitudinal axis of the said pulling vehicle. In this case, it is advantageous for the said means to comprise a hydraulic cylinder.

The advantage of these measures is that the operator of the assembly does not himself have to use force to displace the pivot point. The use of the hydraulic cylinder allows the adjustment to take place remotely, for example from the cab of the pulling vehicle. The use of a hydraulic cylinder has the further advantage that relatively inexpensive components, such as a pump and a pressure accumu1ator, can be used to actuate the said cylinder. In this case, it is advantageous for displacement of the pivot point on the pulling vehicle to be carried out in such a way that the pivot point is adjusted automatically, depending on the speed of the vehicle.

In a possible variant embodiment, it is desirable for the front wheels of the trailer to be connected to the rear wheels with the aid of coupling means in such a manner that rotation of the front wheels with respect to the trailer results in rotation of the rear wheels with respect to the trailer.

If it is very important that one or more trailers should accurately follow a pulling vehicle, in the prior art trailers of the Multi-Trailer type are often used. In trailers of this nature, the pivotable front axle is connected to the pivotable rear axle by means of a torsion tube, for example. Trailers of this nature have the advantage that they are able to follow the pulling vehicle precisely. However, the stability of such vehicles is at risk even at relatively low speeds. As a rule, a maximum speed of ± 30 kmh is adhered to. Especially for trailers of this nature, it is extremely relevant that it be possible to adapt the vehicle behaviour by means of the assembly and the device according to the present invention as a function of the instantaneous speed of the vehicles.

The present invention will be explained in more detail with reference to the appended drawings, in which:

Figure 1 shows a plan view of the assembly according to the present invention.

Figure 2 shows a side view of the trailer according to the present invention.

Figure 3 diagrammatically depicts the path followed by the pulling vehicle and the trailer in the low-speed position.

Figure 4 diagrammatically depicts the path followed by the pulling vehicle and the trailer in the high-speed position.

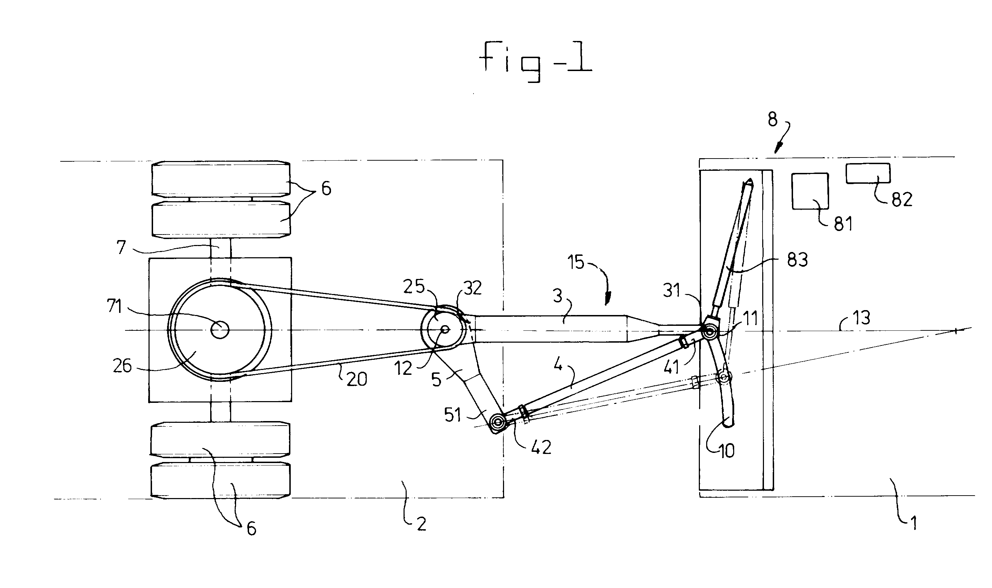

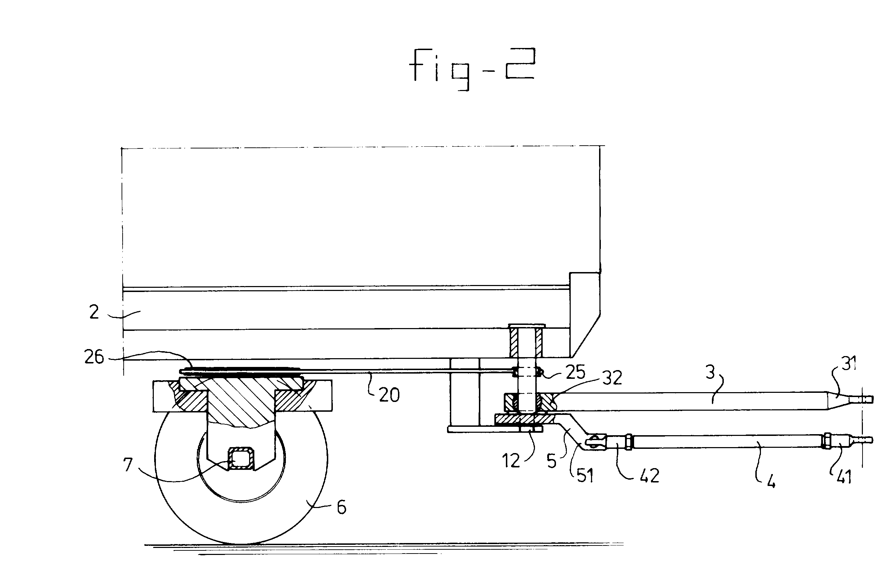

Figures 1 and 2 show a device according to the present invention, by means of which a pulling vehicle 1 is coupled to a trailer 2. The trailer 2 is connected to the pulling vehicle 1 with the aid of a shaft 3 and with the aid of an assembly comprising a steering rod 4 and a steering arm 5. The shaft 3 is used to pull the trailer 2 and the steering rod 4 and the steering arm 5 are used to steer the front wheels 6 of the trailer 2, depending on the angular displacement of the pulling vehicle 1 with respect to the trailer 2. The steering arm 5 is connected to the front wheels of the trailer in such a manner that turning of the steering arm 5 with respect to the trailer 2 results in turning of the front wheels 6 of the trailer 2 with respect to the trailer 2. In the device, the pulling function and the steering function of the trailer are carried out independently of one another.

A first end 31 of the shall 3 is pivotably attached to a fixed pivot point 11. The second end 32 of the shaft is pivotably attached to a fixed pivot point 12 on the trailer. A first end 41 of the steering rod 4 is pivotably attached to the pulling vehicle 1. In a limit position, this pivot point of the steering rod 4 coincides with the pivot point 11 of the shaft 3 on the pulling vehicle 1. This position is illustrated in Figure 1 by solid lines. The pivot point of the steering rod 4 on the pulling vehicle 1 can be displaced from this position, with respect to the longitudinal axis of the pulling vehicle 1, with the aid of displacement means 8, for example a pump 81, a pressure accumulator 82 and a hydraulic cylinder 83. This is illustrated by means of dot-dashed lines in Figure 1. The pivot point of the steering rod 4 moves along a path 10, for example a guide groove, which is arranged on the pulling vehicle 1.

The second end of the steering rod 4 is pivotably coupled to the free end 51 of a control arm 5. The control arm 5 is pivotably attached to the trailer 2. The pivot point 12 of the steering arm 5 coincides with the pivot point 12 of the shaft 3 on the trailer 2.

The path 10 is curved in such a manner that, when the shaft 3 is in line with the longitudinal axis of the pulling vehicle 1, the pivot point of the steering arm 4 on the pulling vehicle 1 can be displaced without this causing the steering arm 5 to rotate about the pivot point 12. This means that the path 10 describes part of an arc of a circle, the radius of the said circle corresponding to the length of the steering rod 4.

A first pulley 25 is attached to the steering arm 5. Like the shaft 3 and the steering arm 5, the pulley 25 can rotate with respect to the trailer 2 about the pivot point 12. The first pulley 25 is connected to a second pulley 26 by means of a flexible component 20. The flexible component 20 which is used together with the pulleys may, for example, comprise a cable, a belt, a chain or any other means which could be used. The second pulley 26 is coupled to the front axle 7 of the trailer 2. The front axle 7 and the second pulley 26 can pivot with respect to the trailer 2 about the corresponding pivot point 71. As can be seen from Figure 1, the first pulley 25 is smaller than the second pulley 26.

The device according to the present invention operates as follows: If the pivot point of the steering rod 4 on the pulling vehicle 1 coincides with the pivot point 11 of the shaft 3 on the pulling vehicle (solid lines in Figure 1), the angle between the steering arm 5 and the shaft 3 remains identical irrespective of the position of the vehicles 1, 2 with respect to one another. This means that the device will then perform in the same way as a steering device which is known from the prior art, the intention being for the trailer 2 to follow the route of the pulling vehicle 1. Specifically, when the pulling vehicle 1 starts to enter a bend, the shaft 3 will, at a given moment, no longer be in line with the longitudinal axis of the vehicle 1. This pivoting of the shaft 3 with respect to the pulling vehicle 1 will, with the aid of the steering arm 5, the pulleys 25, 26 and the flexible component 20, impart a steering signal to the front wheels 6 of the trailer 2. The dimensions of the pulleys 25, 26 determine the transmission ratio with which the steering signal is transmitted to the wheels 6. If the transmission ratio is equal to one, the trailer will seek to cut the bend through which the pulling vehicle has passed. If the transmission ratio is less than one, the trailer will execute a wider bend. The transmission ratio can therefore be used to select the way in which the trailer 2 follows. Thus the transmission ratio may, for example, be selected in such a manner that the trailer 2 follows the route of the pulling vehicle 1. Since pulleys are used to transmit the transmission ratio, the transmission ratio remains identical irrespective of the instantaneous angular displacement of the shaft 3 with respect to the pulling vehicle 1.

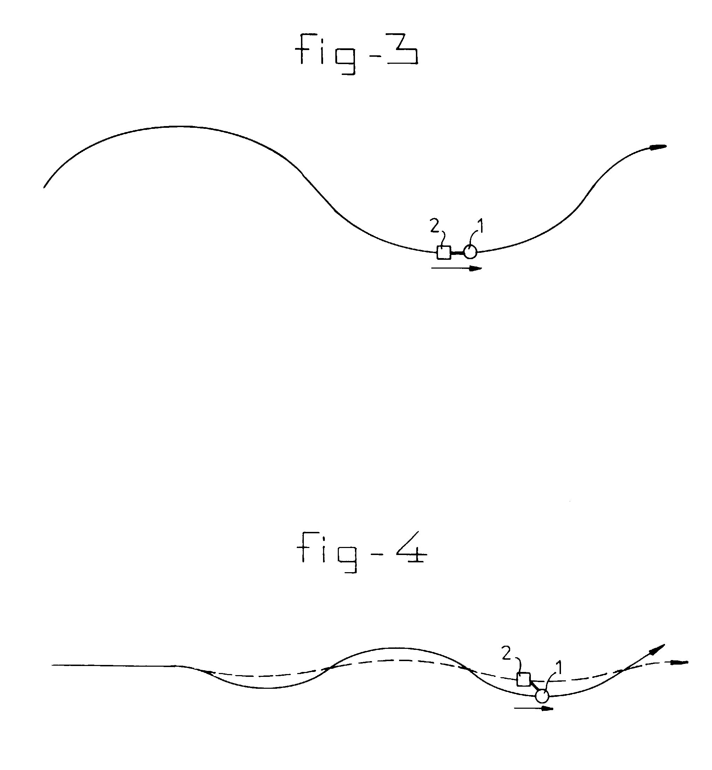

The situation discussed above is ideal where the vehicles 1, 2 are travelling relatively slowly and may therefore be referred to as the "low-speed position". Due to the low speed of travel in this position, the stability of the trailer is not at risk despite the manoeuvrability of the trailer and the way in which it closely follows the path. The way in which the trailer 2 follows in this low-speed position is diagrammatically depicted in Figure 3.

If the vehicles 1, 2 are to be driven relatively quickly, it is in theory desirable for the length of the shaft 3 to be extended in order to increase the stability of the trailer 2. The same effect can be achieved, by means of the device according to the present invention, by displacing the pivot point of the steering rod 4 on the pulling vehicle 1 along the path 10. When the said pivot point has been displaced (steering rod 4 in broken lines in Figure 1), there is a steering and pulling mechanism comprising four rods between the pulling vehicle I and the trailer. This is also referred to as the "high-speed position". In this position of the steering rod 4, the way in which the trailer 2 follows is determined by the length of the "virtual shaft". The length of the virtual shaft is given by taking the distance from the point at which the continuation of the shaft 3 and the continuation of the steering rod 4, in the direction of the pulling vehicle 1, intersect one another to the pivot point 12 on the trailer 2.

For the vehicle dynamics of the trailer, this means that the trailer 2 will no longer continue to precisely follow the route of the pulling vehicle 1. The turning movements of the pulling vehicle 1 are transmitted in a "damped" manner to the trailer 2. If, in this position, the assembly 15 is travelling at low speed, the accurate way in which the trailer 2 follows is therefore lost. However, if, in this position, the vehicles are moving at high speed, the trailer 2 will continue to follow the pulling vehicle 1, while the stability of the trailer 2 will be considerably improved compared to travelling at high speed in the low-speed position. The way in which the trailer 2 follows in this position is diagrammatically depicted in Figure 4.

In view of the above, it is possible, by means of the device according to the present invention, to manipulate the way in which the trailer 2 follows by displacing the pivot point of the steering rod 4 on the pulling vehicle 1 with respect to the centre axis of the pulling vehicle 1. It is possible for the assembly to contain means for the automatic manipulation of the displacement of the pivot point as a function of the speed at which the vehicles 1, 2 are travelling. The said means may, for example, comprise a microprocessor (not shown) which is coupled to the hydraulic pump 81 of the assembly. Since the path 10 is designed in such a manner that the steering rod 4 can rotate about the pivot point which it has in common with the pivot arm 5 without the steering arm 5 rotating in the process, the position of the steering rod 5 can be varied without at the same time transmitting a steering signal to the wheels 6. The steering rod 4 can therefore be adjusted while the vehicles 1, 2 are in motion. In this case, the special shape of the path 10 allows the adjustment to be carried out using relatively little force.

The above text describes the case in which the device according to the present invention is used for pulling vehicles 1 and trailers 2 in which only the front axle 7 can be steered. However, the device may equally advantageously be employed for pulling vehicles 1 and trailers 2 in which the rear wheels can also be steered. In the prior art, vehicles of this nature are often equipped with a front axle and a rear axle which are able to rotate as a unit with respect to the vehicle. In this case, a steering rod is generally positioned in a crosswise manner between the front axle and the rear axle, which rod ensures that a rotation of the front axle to the right is converted into a rotation of the rear axle to the left.

## Claims

1. Assembly comprising a pulling vehicle (1), a trailer (2) and a device (15) for pulling and steering the trailer (2) with the aid of the said pulling vehicle (1), it being possible to steer the trailer (2) with the aid of the front wheels (6), and the said device (15) for pulling and steering the trailer (2) comprising:
a shaft (3), the first end (31) of which is attached pivotably to the pulling vehicle (1) and the second end (32) of which is attached pivotably to the trailer (2);
and a steenng rod (4), the first end (41) of which is attached pivotably to the pulling vehicle (1), the pivot point of the steering rod (4) on the pulling vehicle (1) being displaceable from a first position, with respect to the longitudinal axis (13) of the said vehicle (1), to a second position, and the second end (42) of the steering rod (4) being connected to the front wheels of the trailer, in such a manner that the front wheels (6) can be steered with the aid of the steering rod (4),
characterized
in that the said first position of the pivot point of the first end (41) of the steering rod (4) on the pulling vehicle (1) essentially coincides with the pivot point (11) of the shaft (3) on the pulling vehicle (1), and
in that the second end (42) of the steering rod (4) is pivotably connected to the free end (51) of a steering arm (5) which is attached pivotably to the trailer (2), the pivot point (12) of the steering arm (5) on the trailer (2) coinciding with the pivot point (12) of the shaft (3) on the trailer (2).

2. Assembly according to Claim 1, characterized in that the steering arm (5) is connected to the front wheels (6) of the trailer with the aid of a flexible component (20) which is guided by a pair of pulleys (25, 26), the first pulley (25) being connected to the steering arm (5) and the second pulley (26) being connected to the front wheels (6).

3. Assembly according to Claim 1 or 1, characterized in that the front wheels (6) of the trailer (2) are connected to a front axle (7) and the front axle (7) as a whole can rotate with respect to the trailer (2).

4. Assembly according to Claims 1 to 3, characterized in that the pivot point of the first end (41) of the steering rod (4) is displaceably attached to a path (10) which is described by the end of the steering rod (41), in the event of a rotation of the steering rod (4) about the pivot point at which the second end (42) of the steering rod (4) is connected to the steering arm (5), when the pulling vehicle (1) and the trailer (2) are positioned in such a manner with respect to one another that the shaft (3) is in line with the longitudinal axis of the pulling vehicle (1).

5. Assembly according to one of Claims 1 to 4, characterized in that there are means (8) on the pulling vehicle (1) for displacing the pivot point of the first end (41) of the steering rod (4) with respect to the longitudinal axis of the said pulling vehicle (1).

6. Assembly according to Claim 5, characterized in that the said means (8) comprise a hydraulic cylinder (83).

7. Assembly according to one of the preceding claims, in which the rear wheels of the trailer can be steered, characterized in that the front wheels (6) of the trailer (2) are connected to the rear wheels with the aid of coupling means in such a manner that rotation of the front wheels (6) with respect to the trailer (2) results in rotation of the rear wheels with respect to the trailer (2).

8. Device (15) for pulling and steering a trailer, according to one of the preceding claims.
